Europäisches Patentamt

European Patent Office

Office européen des brevets

(11) Publication number: **0 193 247**
**A2**

(12) **EUROPEAN PATENT APPLICATION**

(21) Application number: **86200290.4**

(22) Date of filing: **25.02.86**

(51) Int. Cl.⁴: **G 01 K 17/20**
**G 01 K 1/14**

(30) Priority: **25.02.85 US 705754**

(43) Date of publication of application:
**03.09.86 Bulletin 86/36**

(84) Designated Contracting States:
**DE FR GB SE**

(71) Applicant: **THE DOW CHEMICAL COMPANY**
**2030 Dow Center Abbott Road P.O. Box 1967**
**Midland, MI 48640(US)**

(72) Inventor: **Mack, Russel T.**
**304 Balsam**
**Lake Jackson Texas 77566(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **Portable heat fluxmeter fixture.**

(57) A thermal fluxmeter having opposed surfaces having and forming an output signal by means of a plurality of thermocouples connected to each other and positioned adjacent the opposed surfaces is used. The thermal fluxmeter is supported in a fixture. A force applied to the fixture and fluxmeter establishes a stabilized contact force against a surface to measure heat loss through the surface. This avoids variations in surface contact.

FIG.1

0193247

33,185-F

# PORTABLE HEAT FLUXMETER FIXTURE

This invention is directed to a thermal fluxmeter and, in particular, a mounting fixture therefore.

In determining the heat loss of certain structures, it is helpful to measure the heat flux from a specified point. To the degree that a measuring device is placed on the surface, it interferes, at least in theory, with the heat loss. That is, the measuring device itself may well function as an insulator and reduce the flux which is assayed in the measurement. On the other hand, it is necessary to contact a thermal fluxmeter against a surface area for obtaining the measurement. The degree and consistency of contact between the flux measuring device and the surface undergoing measurement may create errors in the measurements. Accordingly, relatively brief but intimate and consistent contact between the sensitive area of the fluxmeter and the object undergoing tests helps greatly in obtaining accurate data.

One mode of assisting this contact is to apply a paste or a heat conductive grease to an area before positioning a thermal fluxmeter against that area. As an aid to this, applying the thermal fluxmeter against the surface under pressure helps to obtain more consistent data. The heat flow is consistently sampled. A pressure force is helpful in the sense that there is more intimate surface contact between the test instrument and the surface of interest. This either reduces or eliminates the microvoids at the interface (under the fluxmeter) to obtain a more accurate representation of the metered surface. While one might state (in theory) that maximum pressure yields maximum accuracy, there is a point of diminishing returns with increasing pressure.

The device of the invention enables a steady pressure force to be applied to a surface which is sufficiently high to minimize interspacial thermal resistance errors. This increases the repeatability of the apparatus by assuring that approximately the same pressure is applied during each use of the device. Moreover, it enables the device to be applied and removed (about one minute dwell time) so that distortion of the thermal flux by the test instrument is reduced. In the application of a thermal fluxmeter to a specified area, an initial transient stabilizes on heat saturation of the fluxmeter to enable a "settled" reading.

The present apparatus enables a thermal fluxmeter mounted on a fixture to be applied to a surface. Alternate mounting fixtures are illustrated in which one fixture can be used on flat surfaces and another fixture finds suitable application on curved surfaces. The latter can be used on the outer surfaces of storage tanks, pressure vessels, pipes, and the like.

The fixture of the invention applies a thermal fluxmeter to a surface with a pressure force which is substantially stabilized. In this manner, repetitive measurements can be conducted thereby assuring reasonably accurate, repeatable data.

The apparatus of the invention essentially comprises a hand held portable fixture having a handle and a constant force spring which resists the application of a pressure force to the handle and fixture so that the applied pressure or loading is substantially consistent and uniform from one use to the next. Output data is obtained from a plurality of thermocouples mounted in the fluxmeter.

More particularly, the invention relates to an apparatus for measuring heat flux from a surface, comprising;

(a)  a support fixture having a plurality of legs;

(b)  a planar fluxmeter supported by said fixture and having a face thereon adapted to be contacted against a surface to measure heat flux therefrom;

(c)  pressure control means for urging said fluxmeter toward said surface, said control means providing in repeatable fashion a substantially constant pressure force to said fluxmeter such that contact of the face thereof against the surface is consistent; and

(d) mounting means extending between said legs for supporting said fluxmeter and for conforming the fluxmeter to a surface in pressure contact thereagainst.

So that the manner in which the above recited features, advantages and objects of the present invention are attained and can be understood, a more particular description of the invention may be had by reference to the embodiments which are illustrated in the appended drawings in which:

Figure 1 is a perspective view of a flexible fluxmeter deployed on a pair of parallel cables and supported by a fixture;

Figure 2 is a sectional view through a constant force spring mechanism for tensioning a cable for supporting a flexible thermal fluxmeter;

Figure 3 is a sectional view along line 3-3 of Figure 4 showing details of a handle construction;

Figure 4 is an alternate fixture wherein a fluxmeter is fixably mounted on a rectangular, rigid support plate;

Figure 5 is a plan view of a fluxmeter in the form of a large wafer;

Figure 6 is a sectional view along line 6-6 of Figure 5 (which is exaggerated in thickness) to show details of construction of a fluxmeter; and

33,185-F                              -4-

0193247

Figure 7 is a fragmentary sectional view of the structure of Figure 4 showing the relationship of the fluxmeter to its support plate.

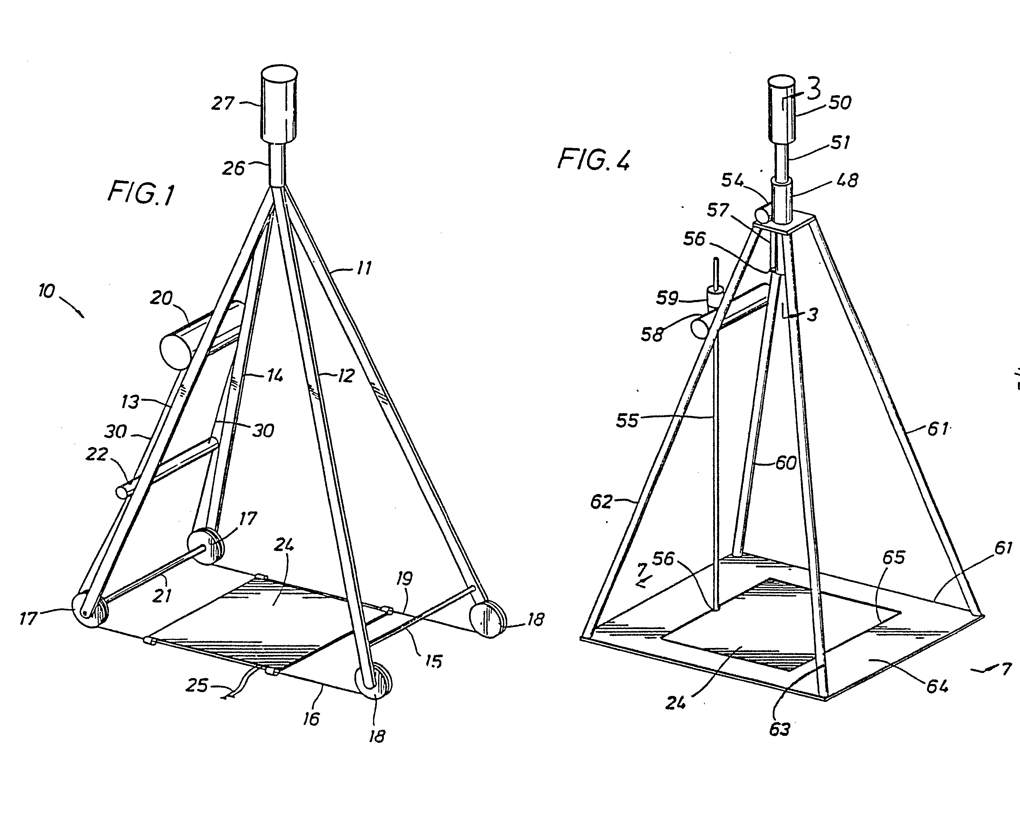

Figure 1 illustrates a hand held fixture or device 10 for a fluxmeter comprising a frame structure having four diverging legs 11, 12, 13 and 14,. For a typical hand held version, the legs can range between 25 cm to 40 cm in length and are connected by a transverse frame member 15 to fix the spacing of the legs and to make the frame structure rigid. The legs 12 and 13 support a flexible cable 16 which is anchored at one end to a fixed member 18, which can be a disc-shaped member. The cable is wound around a rotatably mounted wheel 17 supported on the leg 13. The cable 16 partially loops around the wheel 17 and extends upwardly to a draw bar 22 positioned below a spring tension mechanism 20. A cable 19 is wound in like fashion around a rotatable wheel 17 and is connected to the draw bar 22.

The cables 16 and 19 have a width or spacing which is approximately equal along the length of the cables. The legs 13 and 14 are made rigid and spaced by a traverse frame member 21 thereby assuring that the two cables 16 and 19 are substantially parallel and in a common plane, and are thus able to support a thermal fluxmeter 24. The fluxmeter 24 is a planar rectangular member or wafer formed of a flexible material and adapted to be facially contacted against a curved surface. Typical objects having curved surfaces include objects such as pipes, drums, cylindrical or spherical pressure brought vessels, and the like. If the fluxmeter is brought into contact with a spherical

0193247

surface of relatively large radius, it will still lie sufficiently flat against the curved surface to obtain good contact over the entire surface area. The fluxmeter of the invention can be used in measuring thermal flux from most curved surfaces including those having a radius of about 5 cm and greater.

The fluxmeter 24 provides an output (usually a millivolt output) on a pair of conductors 25 which are connected to a suitable amplifier and a recording apparatus (not shown) to record a signal representative of the thermal flux.

The terminal ends of the four legs are joined to a single post 26 provided with a fixed handle 27. Although precise accuracy is not required, it is helpful to have a pressure force which, on repeated application does not vary significantly. The force can be adjusted by controlling the tension on the cables. Alternatively, it can be adjusted by controlling the force applied through the handle 27. To this end, at least one such pressure force regulating mechanism is needed which is either located in the spring tension mechanism 20 which controls the tension on the cables, or alternatively, in the pressure force which is applied to the handle 27 when the fixture is manually employed by an operator. For this reason, both force regulating mechanisms are shown in Figure 1, but it is noted that typically only one need be included in a device.

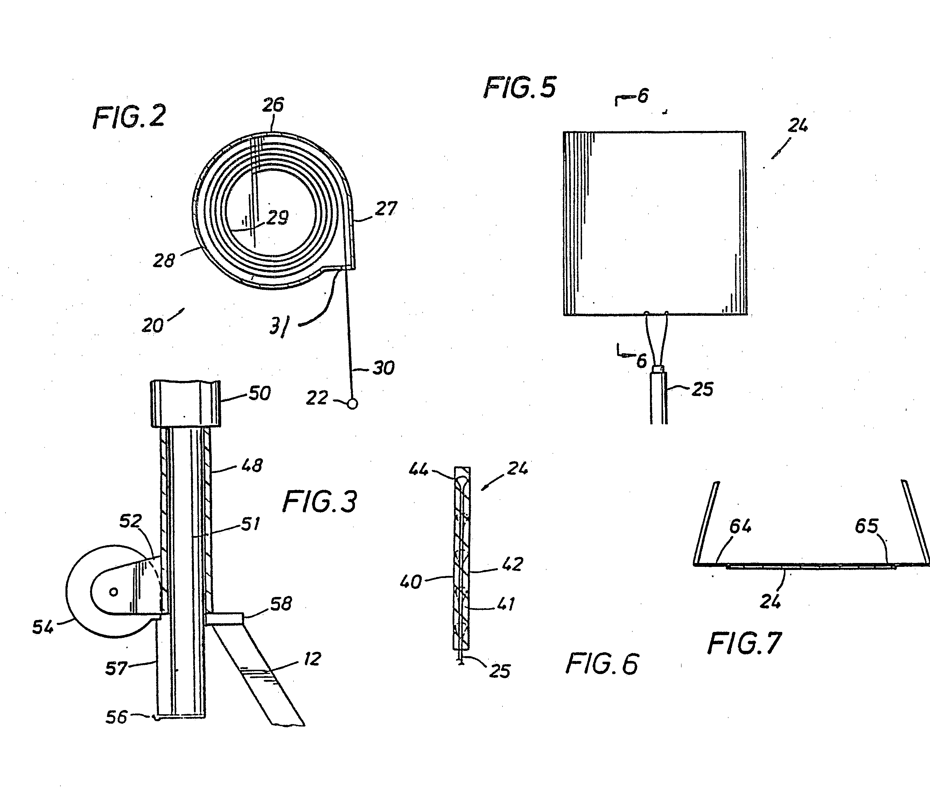

The spring tension mechanism 20 illustrated in Figure 2 applies a relatively "constant force" to the mounting cables 16 and 19. The mechanism comprises a housing 26 having a flat wall portion 27 which can be easily mounted on a pair of the legs 13, 14. The housing 26 defines an internal chamber 28 and has a length sufficient to accommodate a coil spring 29 within the chamber. The spring is made of an elongate band of spring material and wound into a coil of several turns. A flat metal spring having a width of about 1.25 cm is preferably employed in this embodiment. Springs of any desired width may be used, however, depending on the constant force that an operator wishes to apply to the fixture and fluxmeter. One terminal end 30 of the spring extends through a slot 31 in the housing and is connected to a draw bar 22 to apply a relatively constant force to the cables. As an example, if the coil spring has eight turns and the end 30 protrudes only slightly from the slot 31, pulling the end 30 uncoils part of the coil by a turn or fraction thereof. The extension of the coil end is accompanied by a retractive force of substantially fixed magnitude; that is, the force is fairly constant.

Coil springs typically develop transverse or twisting forces due to canting as well as tractive forces normal to the centerline about which the spring is wound. A pair of coil springs 29, in a back to back relationship, are preferably employed in the practice of the invention. A pair of such coil springs are oriented such that transverse spring forces will balance and, accordingly, the spring force on the draw bar 22 will have only a tractive component substantially normal to the draw bar. The spring force will be evenly distributed to the draw bar and to the cables 16 and 19. For symmetry and transverse force balance, the coils are therefore duplicated and connected in the above mentioned a back to back relationship at their terminal ends 30 to apply a relatively even, uncanted force to the cable system. The coil springs may be spaced from each other by a distance of from 5 cm to 7.5 cm to enable extension of up to 10 cm travel in a typically sized model. Coil extension and retraction occurs evenly and smoothly so that the cables 16 and 19 are enabled to wrap around or conform to a curved surface.

The fluxmeter 24 in the embodiment illustrated in Figure 1 preferably is a flexible sheet-like member or wafer 41 and is more clearly shown in Figures 5 and 6.

The fluxmeter is preferably made of a sheet of a synthetic resinous material having a plurality of thermocouples 44 embedded therein. The thermocouples are positioned in close proximity to the parallel opposing surfaces 40 and 42 of the sheet. The thermocouples 44 are arranged in a predetermined array, i.e. spaced relationship over each surface and embedded just below the surfaces 40 and 42 of the sheet. Along each surface, the arrays of thermocouples are connected in series to each other and thus are designed to read the average temperature over each surface. The thermocouples on opposing surfaces are also connected in parallel so that the voltage output across the conductors 25 relates to the average temperature difference on the opposing surfaces.

It is to be understood that the fluxmeter can be constructed of other suitable materials such as, for example, fabrics. If it is desired to employ a fluxmeter for relatively high temperature measurements of above 200°C it is preferred to employ a 3-layered metal laminate of iron and constantan (an alloy of nickel and copper), or copper and constantan, and the like. Such metal laminates have large interfaces which form large thermocouples.

Various synthetic resinous materials may be used as a sheeting material for the fluxmeters. It is preferred, however, to use a polyamide, e.g. nylon 6,66, etc., in the practice of the embodiment illustrated in Figure 1. The thickness of the sheet forming the fluxmeter is preferably on the order of about 3 mm to add as little thermal resistance to a wall surface as possible.

Heat flow through the material changes the temperature of the opposing surfaces 40 and 42. The device is relatively small so that it does not distort heat flux in an excessively large area. Because the quantity of material in the fluxmeter is relatively small, stabilization for obtaining data occurs relatively quickly, within about one minute. For example, if the surface 40 of the fluxmeter is at an ambient temperature and applied to a surface at a temperature of about 150°C, the temperature on opposite surfaces 40 and 42 will stabilize in about 1 minute.

The fluxmeter is attached by loops or sleeves, which may consist of a fabric or a plastic material, at their edges to the cables 16 and 19 and is able to flex with the cables. Thus, when the fluxmeter is held against a curved surface, the cables 16 and 19 are pulled taut against the curved surface and the fluxmeter will bend and assume this shape as well. This

0193247

may require an extension of the cables by application of a pressure force to the spring tension mechanism to conform the fluxmeter to a curved surface. The device is thus positioned with all of the legs in firm contact against the curved surface. If the device is held against a pipe, the legs are preferably positioned to straddle the pipe so that the cables can curve more or less in a semi-circle around the pipe and thereby position the fluxmeter 24 in intimate contact against the pipe, inscribing an arc of curvature equal in length to the width of the fluxmeter 24.

The holding or pressure force applied to the fluxmeter 24 is substantially constant. That is, if the cables 16 and 19 have a substantially fixed or constant tension, the fluxmeter 24 is held with a substantially equal compressive or pressure force against the curved surface. To this end, the coil spring shown in Figure 2 is desirable to sustain a substantially uniform opposing force. That is, the loading or pressure force on the fluxmeter is approximately constant. Variations of perhaps two or three percent do not noticeably impair the data that is produced in a measurement so long as adequate pressure contact is made.

With reference to the embodiment illustrated in Figures 3 and 4, there is illustrated a fixture comprising an upstanding fixed sleeve 48 and a handle 50 connected to an extendable push rod 51 which extends through the sleeve 48. The sleeve supports a mounting tab 52 for a housing 54 which encloses a "constant force" flat coil spring.

The shaft 51 has a protruding tab 56 mounted on a terminal end thereof. As the shaft 51 is forced downwardly by application of a pressure force to the handle 50, the tab 56 is carried with it and pulls the end of the wound up spring 57 out of the housing 54. When the coil spring is pulled, a resisting force is observed by an operator upon the application of a manual pressure force to the handle. As the spring is pulled out of the fixedly mounted housing 54, it creates a force which is substantially fixed over a distance of a few centimeters. Alternatively, the constant force urging means in the housing 54 may conveniently take the form of a gauge, load cell or any other suitable device to permit the application of a controlled pressure force to the fluxmeter, thermocouple, or both, to a surface being measured.

The fixed sleeve 48 is supported on a frame member 58 which is connected to the legs 60, 61, 62 and 63 of the fixture in similar manner to that shown in Figure 1. The legs support a transversely extending rigid plate 64 having a central opening 65. The plate preferably is a flat sheet metal plate of a generally rectangular configuration although the plate may be constructed of other shapes as well. The peripheral edges of the fluxmeter 24 are glued or otherwise secured to the edges of the opening 65 on the lower surface of the plate 64 as shown in Figure 7. The plate 64 can be relatively thin and on the order of about 0.8 mm in thickness. This enables the face of the fluxmeter 24 to be positioned and held against a flat surface such that only the fluxmeter is in contact with the surface being measured. The surface contact of the fluxmeter is made with a substantially fixed, perpendicular loading or pressure force applied to the fixture through the handle, thereby assuring repeatability from one application to the next application.

The embodiments shown in Figures 1 and 4 differ in that Figure 4 is intended primarily for a flat surface while Figure 1 is used to greater advantage on a curved surface. Regardless of the relative small size of the hand held instrument of the invention, the instrument of Figure 4 can also be used in measuring heat losses from relatively large cylindrical or spherical tanks which oftentimes have a diameter of 30 meters or more. It will be understood that the curvature when measuring a surface area of, for example, 65 cm$^2$ is negligible on such a large tank. Likewise, the fixture of Figure 1 can also be used on perfectly flat surfaces.

The fixture shown in Figure 4 includes an optional elongate thermocouple assembly 55 for measuring surface temperature. The assembly 55 is commercially available and has a temperature measuring thermocouple (not shown) at one end thereof extending through an opening 56 in the mounting plate 64. The thermocouple assembly 55 is telescoped through a mounting sleeve 59 to slide against the force of the coil spring resisting upward pushing. The thermocouple assembly 55 extends a fraction of a centimeter below the plate 64 to cause upward loading or pressure force on the rod, thereby assuring contact with a surface to measure surface temperature. The spring force must be high enough for reliable contact, but lower than that of the constant force spring controlling the fluxmeter pressure force.

The hand held fixture of the invention thus applies a substantially calibrated and sustained force against a surface. That is, upon repeated use, the fixture is applied with a substantially constant loading or pressure force against a surface to be measured. The pressure force is preferably fixed within a range of a few percent to assure consistency in use.

The constant pressure force described above enables the fluxmeter 24 to maintain a consistent uniformity of contact with a surface at which the measurements are being undertaken. For this reason, data obtained from a multitude of data points is very consistent. In a typical test, the fluxmeter is applied at a specified location for a fixed interval of time of about one minute. It is desirable that the interval be sufficiently long so that the opposed surfaces of the fluxmeter have sufficient time to come up to the temperature of the surface that is being measured. Moreover, with the application of a relatively fixed pressure force, the reliability of the data so obtained is much higher. The device is relatively light weight, enabling an operator to obtain many data points during the work day whereby a large heat loss survey can be quickly conducted.

While the constant force urging means exemplified in Figures 2 and 3 may comprise a constant force coil spring, it is not intended to limit the present invention to such spring(s). The constant force urging means may include load cells, gauges or other means to ensure repeatability.

1.  ¨ Apparatus for measuring heat flux from a surface, comprising:

(a)  a support fixture having a plurality of legs;

(b)  a planar fluxmeter supported by said fixture and having a face thereon adapted to be contacted against a surface to measure heat flux therefrom;

(c)  pressure control means for urging said fluxmeter toward said surface, said control means providing in repeatable fashion a substantially constant pressure force to said fluxmeter such that contact of the face thereof against the surface is consistent; and

(d)  mounting means extending between said legs for supporting said fluxmeter and for conforming the fluxmeter to a surface in pressure contact thereagainst.

2.  The apparatus of Claim 1, wherein said fixture includes four legs which terminate at one of their ends in a common plane, a frame member connected to each of a pair of said legs to fix the ends of each pair of said legs in a rigid rectangle in said common plane.

3. The apparatus of Claim 1 or 2, wherein said pressure control means comprises a spring tension mechanism having a constant force flat coil spring mounted in a housing, said spring being connected to said mounting means for the fluxmeter, said mounting means comprising a pair of flexible cables for supporting the fluxmeter in said common plane, and wherein said fluxmeter and said cables are bendable to conform to a curved surface when in contact thereagainst.

4. The apparatus of Claim 3, wherein each cable extends over a rotatable member mounted on one of said pair of legs and having an end thereof secured to another leg of said pair of legs, said fluxmeter having support means for supporting the fluxmeter between the cables in said common plane.

5. The apparatus of Claim 2, 3 or 4, including a handle connected to the opposite ends of said legs for application of a substantially constant pressure force to the support fixture and the fluxmeter in contact with said surface.

6. The apparatus of any one of the preceding claims, wherein said fluxmeter comprises a flexible sheet having embedded therein a plurality of thermocouples arranged in a mutually spaced relationship adjacent the opposed surfaces of said sheet and electrically connected to each other to provide a voltage signal indicative of the average temperature difference between the opposed surfaces.

7. The apparatus of Claim 6, wherein said flexible sheet is made of a material selected from a synthetic resinous material, and a fabric, and wherein said thermocouples are positioned adjacent the opposed surfaces of said sheet.

8. The apparatus of Claim 1, wherein said legs support a substantially rigid plate member having an opening, and wherein said fluxmeter is supported on the lower surface of the plate member and exposed within the opening in said plate member.

9. The apparatus of Claim 1, or 8 including a handle connected to a shaft, said shaft extending through a mounting sleeve, and wherein said handle and said sleeve are connected to said pressure control means providing a substantially fixed opposition force to said handle.

10. The apparatus of Claim 8 or 9, including an elongated thermocouple assembly supported by said support fixture, said thermocouple assembly extending through a mounting sleeve for application of a pressure force through a handle on said fixture to said thermocouple assembly in contact with the surface.

11. The apparatus of Claim 8 or 9, including an elongate thermocouple movably supported by said support fixture with the lower end thereof normally extending below the lower surface of said planar fluxmeter; and means urging said elongate thermocouple with a substantially constant force to said normally extending position thereof and yielding upon contact with the surface being measured to permit substantially constant force contact of said planar fluxmeter and said thermocouple with the surface being measured.

12.   The apparatus of any one of the preceding claims, wherein said pressure control means comprises a load cell or gauge.

FIG.1

FIG.4

1/2

0193247

FIG.2

FIG.5

26

29

27

28

20

31

30

22

24

6

6

25

50

48

FIG.3

52

51

54

58

57

12

56

44

24

40

42

41

25

FIG.6

64

65

24

FIG.7

2/2

0193247